# EUROPEAN PATENT SPECIFICATION

(11) **EP 0 803 926 B1**
(45) Date of publication and mention of the grant of the patent: **19.12.2001**
(21) Application number: 97110175.3
(22) Date of filing: 03.09.1991
(51) Int. Cl.: H01M 10/40, H01M 4/58

(54) **A secondary battery or cell with a non-aqueous electrolyte**
Sekundärbatterie oder Zelle mit nichtwässrigem Elektrolyt
Batterie ou cellule secondaire à électrolyte non-aqueux

(30) Priority: 03.09.1990 JP 23351290; 17.01.1991 JP 1847791
(43) Date of publication of application: 29.10.1997
(62) Divisional of application: 91114832.8
(73) Proprietor: MATSUSHITA ELECTRIC INDUSTRIAL CO., LTD., Kadoma-shi, Osaka-fu (JP)
(72) Inventor: Ozaki, Yoshiyuki, Neyagawa-shi, Osaka-fu (JP); Eda, Nobuo, Hirakata-shi, Osaka-fu (JP); Morita, Akiyoshi, Takaishi-shi, Osaka-fu (JP)
(74) Representative: Eisenführ, Speiser & Partner

(56) References cited:
- EP-A- 0 249 331
- WO-A-90/13924

## Description

### FIELD OF THE INVENTION

The present invention relates to a secondary battery or cell (hereafter merely referred to as battery) with a non-aqueous electrolyte, particularly to a small-sized, light-weighted, new secondary battery.

### BACKGROUND OF THE INVENTION

Recently portable and cordless tendency in electronic appliances for general use have been rapidly progressing. Accordingly, a demand for a small-sized, light-weighted secondary battery having a high energy density, used for electric power supply, has been increasing. From this point of view, non-aqueous batteries, and particularly lithium secondary batteries are anticipated as batteries having high voltage and energy density and the development of these batteries is urged. Conventionally, manganese dioxide, vanadium pentaoxide, titanium disulfide and the like have been used as a cathode active material of the lithium secondary batteries. Such a battery comprises a cathode of these materials, a lithium anode and an organic electrolyte and charge and discharge of electricity are repeated. However, in a secondary battery employing a lithium metal anode, the problems of internal short circuit caused by dendrite lithium generated upon charging or side reactions between an active material and an electrolyte are a barrier to developing secondary batteries. Further, there has not yet been found out a secondary battery which satisfies the high rate charge and discharge property and the over discharge property.

The safety of the lithium batteries has been also severely pointed out and in battery systems employing lithium metals or lithium alloys therein as an anode, the safety is very difficult to ensure. On the other hand, a new type of electrode active material has attracted the interest, in which the intercalating reaction of stratified compounds is utilized and conventionally, intercalated graphite has been used as the electrode material for long time. Particularly intercalated graphite stratified compound incorporating anions such as ClO₄-ion, PF₆-ion, BF₄-ion and the like is used as a cathode; and intercalated graphite incorporating cations such as Li+, Na+ and the like is supposed to be used as an anode.

However, intercalated graphite incorporating cations therein is very unstable and in the case of using natural or artificial graphite as an anode, the battery lacks the stability and the capacity thereof is low. Further since decomposition of the electrolyte takes place, intercalated graphite cannot substitute for a lithium anode.

Lately it has been found out that cation-doping materials of pseudo graphite materials obtained by carbonization of a variety of hydrocarbon or polymeric materials are effective as an anode and can receive relatively wide application and further have excellent stability in a battery. Accordingly many researches on small-sized, light-weighted batteries with the use of these materials have been made.

On the other hand, as more carbon materials are used as an anode, it is proposed that such Li-contained compounds having higher voltage as LiCoO₂ or LiMn₂O₄ or composite oxide in which a part of Co and Mn is displaced by other elements such as, for example, Fe, Co, Ni, Mn and so on are to be used as an cathode active material.

The amount of lithium occluded and released upon using the above-mentioned pseudo graphite materials having more or less turbostratic structures as an anodic material was measured to be the capacity of 100 - 150 mAh/g carbon and also polarization of carbon electrode, accompanied with charge and discharge, is intensified. Therefore, when these carbon anode materials are used in combination with a cathode of, for example, LiCoO₂ and so on, it is difficult to obtain satisfactory capacity and voltage. On the other hand, it has been reported that in the case of using a high crystalline graphite material as an anode, intercalation reaction of lithium is difficult to proceed due to the gas generated upon charging on the surface of the graphite electrode surface by the decomposition of an electrolyte. It is found out that in spite of generating the gase, cokes form and so on sinter-molded at a high temperature gives relatively high capacity (200 - 250 mAh/g). However, due to the expansion and contraction of the graphite in the C axis direction, accompanied with the electric charge and discharge, the form body is swollen, by which the original shape cannot be kept. Therefore, there is a serious problem in the cycle property.

Therefore, an object of the present invention is to provide a secondary battery with non-aqueous electrolyte, having high voltage, high capacity and an excellent cycle property, by which the aforementioned conventional problems can be solved.

WO90/13924 discloses a rechargeable battery of alkali metal, organic electrolyte type. The cathode of the battery is capable of reversibly incorporating lithium, and the anode comprises a filamentary material, e.g. in the form of carbon black or spherical graphite.

EP 0 249 331 A discloses a secondary battery comprising a rechargeable positive electrode and a rechargeable lithium-containing negative electrode.

### SUMMARY OF THE INVENTION

For the purpose of overcoming the problems mentioned above, according to a first aspect of the present invention, a secondary battery or cell according to claim 1 is provided, by which high voltage approaching 4V and high capacity can be obtained and the cycle property can be improved.

Generally, the uppermost limit of the content of lithium which can be intercalated chemically between the graphite layers is reported to be intercalated graphite C₆Li of the first stage, in which there is intercalated one lithium atom per 6 carbon atoms. In this case, the active material has a capacity of 372 mAh/g. When a pseudo graphite material as mentioned above is used, the content of lithium which can be intercalated is only a few due to the undeveloped layered structure and the charge-discharge reactions are progressing in a noble potencial (around 1.0 V ) than the lithium metal one, and therefore pseudo graphite materials are not suitable for an anodic material.

Accordingly, the inventors selected more crystalized graphite materials as an anode and reviewed their shapes to solve the above-mentioned problems. As a result, it was found out that graphite materials comprising spherical particles are preferred for an anodic graphite material and spherical cokes such as meso carbon micro bead in which mesophase spheres, produced during the carbonization process of pitch, are used as raw material can be used. In these materials, graphitization is an important factor and the lattice spacing at 002 plane (d002) has to be 3.42 Å or less and preferably 3.40 Å or less. In the state of pseudo graphite having a d002 of 3.43 Å, the capacity is low and the polarization of the carbon electrode is intensified, in a same manner as in the other pseudo graphite materials.

Each of the carbon materials according to the present invention, comprising spherical particles, can be easily graphitized by heat treatment at a high temperature, but even through the heat treatment their original spherical shapes are maintained and only a few cracks can be found. Due to the spherical shape, the flexibility to the expansion and contriction of the graphite in the C axis direction can be obtained and though some gas is generated initially, intercalation and deintercalation reaction of lithium take place reversibly. These reactions proceed at a much poor potential, that is 0.05 - 0.20 V lower than the lithium case, by which a secondary battery having high capacity and high voltage and an excellent cycle property can be obtained.

As stated above, however, in the case of using the graphite material comprising the spherical particles as an anode, although an initial capacity as high as 200-250 mAh/g can be obtained, the swelling and decomposition of the anode body was sometimes observed and thus the capacity deterioration becomes large accompanied with charge-discharge cycle.

According to a second aspect of the present invention, therefore, the afore-mentioned problems can be solved by a secondary battery or cell according to claim 2, i.e. by using a composite carbon material comprising the graphite material mixed with carbon fibers to intensify the stiffness of the anode depolarizing mix and thus prevent the anode body from swelling and decomposing.

As one of examples of the carbon fiber used in the invention, there is exemplified a vapor phase growth carbon fiber. The carbon fiber may be prepared by subjecting hydrocarbons such as benzene, methane, propane and so on to vapor phase heat-decomposition under the presence of catalyst base plate made of Fe, Ni, Co and so on in order to make carbon fibers deposited and grown on the base plate.

Another examples are pitch carbon fibers, made from petroleum or coal pitch as a raw material through a spinning and carbonating treatment, and PAN(polyacrylonitrile) carbon fibers made from polyacrylonitrile as a raw material, which may be used in the invention.

In the present invention, mixture ratio between the graphite material and the carbon fiber is an important factor. The carbon fiber content of the composite carbon material is from 5 wt. % to 20 wt. %, preferably from 5 wt. % to 15 wt. % on the basis of the graphite weight.

If the content is below 5 wt. %, the addition effect is not satisfactorily exhibited and thus the charge-discharge cycle property becomes worse. Further if the content is beyond 20 wt. %, the packing density of graphite becomes decreased and thus the capacity of battery lowers.

On the other hand, such compounds containing lithium ion as LiCoO₂ or LiMn₂O₄, or composite oxides in which a part of Co or Mn is displaced by other elements such as, for example, Fe, Co, Ni,Mn and so on may be used as the cathode. In accordance with an objective composition, the composite oxides can be easily made from carbonate or oxide of lithium or cobalt as the raw materials by mixing and sintering them. Needless to say, other raw materials may be used similarly so as to prepare the composite oxide. The sintering temperature usually ranges from 650°C - 1200°C.

Any known electrolytes or separators may be used and not particularly limited.

Apparent from the description, according to the present invention, the graphite material comprises spherical particles and is suitable for intercalation/deintercalation reaction because of the spherical shape. In this case, side reactions such as electrolyte decomposition hardly take place than in a case of any other graphite materials. However, swelling of the anode body is observed accompanied with the charge-discharge cycle and the resulting bad contact between the particles causes a remarkable deterioration of the capacity. Therefore, according to the present invention, such a capacity deterioration can be solved by means that mixing and dispersing of carbon fibers to the graphite material improves the stiffness of the depolarizing mixture and the contact between the particles.

According, the combination of the anode comprising graphite/carbon fiber composite material and the cathode comprising the Li contained composite oxide provides a secondary battery having a high voltage and large capacity and also a superior cycle property.

### BRIEF DESCRIPTION OF THE DRAWINGS

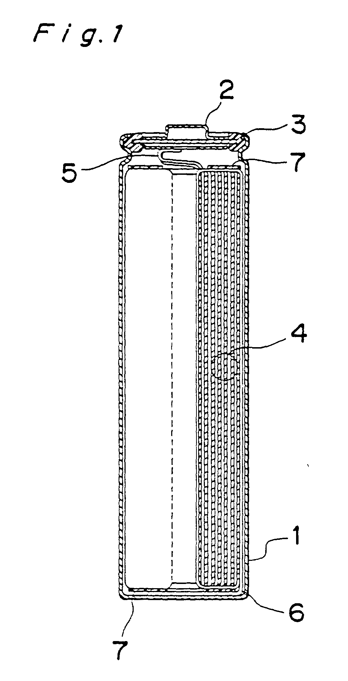

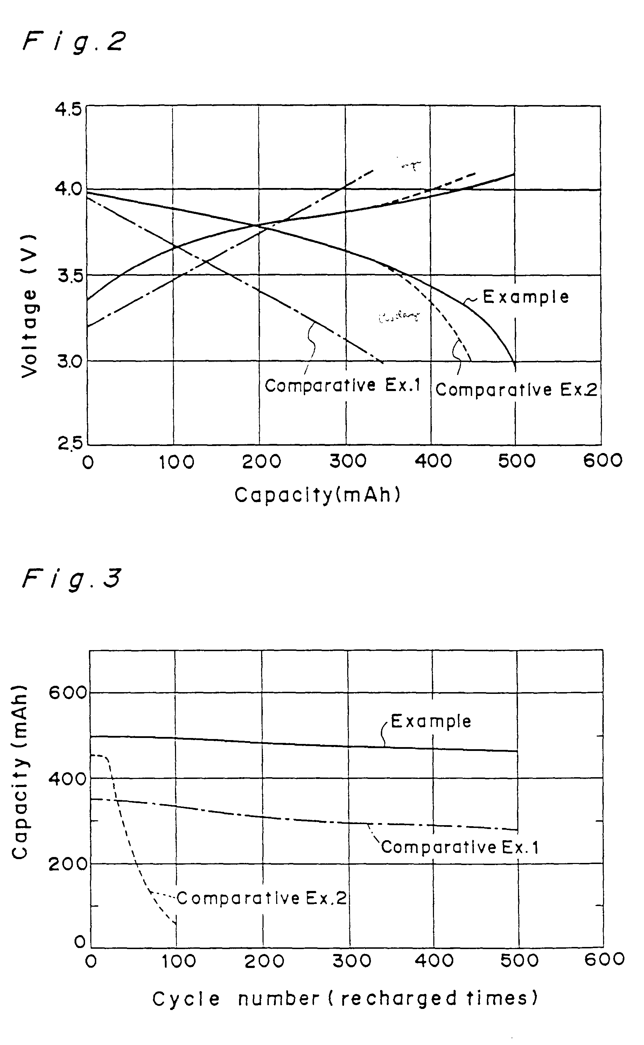

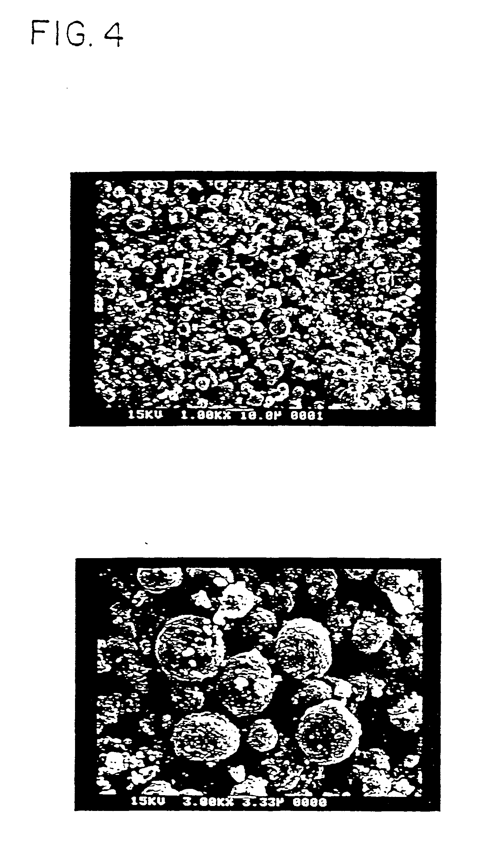

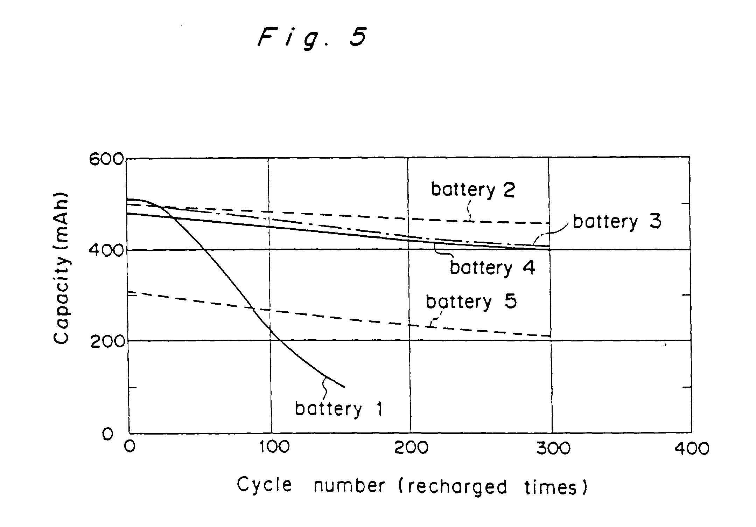

Fig.1 is a longitudinal sectional view showing a cylindrical battery according to the present invention. Fig.2 comparatively shows the charge and discharge curves in the tenth cycle. Fig.3 comparatively shows the cycle properties in Example 1. Fig.4 shows scanning electron microscope photographs of graphite materials comprising spherical particles. Fig.5 comparatively shows the cycle properties in Example 2.

### DETAILED DESCRIPTION OF THE PREFERRED EMBODIMENT

The preferred embodiment of the present invention will be explained in detail.

Fig.1 shows a longitudinal sectional view of a cylindrical battery employed in the present embodiment. 1 denotes a battery case made of a stainless steel plate having organic electrolyte-proof, 2 denotes a sealing plate provided with a safety valve and 3 denotes an insulating packing. 4 is a bundle of electrode plates, in which cathode and anode are wound several times through separators to be accommodated. A cathode lead 5 is taken out of the cathode and connected to the sealing plate. An anode lead 6 is taken out of the anode and connected to the bottom of the battery case 1. 7 denotes insulating rings, each of which is provided at upper and lower sides of the bundle of electrode plates, respectively. Hereafter the cathode and anode plates and the electrolyte and so on will be explained in detail.

### EXAMPLE 1

The cathode is formed as follows.

100 weight parts of LiCoO₂ powder synthesized by sintering at 900 °C for ten hours after mixing Li₂Co₃ and CoCO₃, 3 wt. parts of acetylene black, 4 wt. parts of graphite and 7 wt. parts of fluorocarbon resin binder are mixed and then suspended in a carboxymethyl cellulose aqueous solution to form a paste. The paste is applied to both sides of aluminum foil of 0.03 mm thickness, dried and then rolled to form an electrode plate of 0.19 mm in thickness, 40 mm in width, 250 mm in length. The depolarizing mixture weighs 5 g.

The anode is formed as follows.

To 100 weight parts of meso carbon micro bead (d002 = 3.38 Å) heat-treated at 2800°C, 10 weight parts of fluorocarbon binder is mixed and then suspended in a carboxymethyl cellulose aqueous solution to form a paste. The paste is applied to both of copper foil of 0.02 mm thickness, dried and rolled to form an electrode plate of 0.20 mm in thickness, 40 mm in width, 260 mm in length. The depolarizing mixture weighs 2.5 g.

The leads are attached to the anode and cathode plates, respectively, and the plates are wound through a separator of 0.025 mm in thickness, 46 mm in width, 700 mm in length, made of polypropylene to be stored in the battery case of diameter 13.5 mm in diameter and 50 mm in height. Equivalent volume mixed solvent of propylene carbonate ethylene carbonate, dissolving lithium perchlorate therein in the ratio of 1 mol/ℓ, is used as the electrolyte.

Before sealing the battery, charge and discharge are carried out. After the gas generated is fully deaerated under vacuum, the sealing is carried out to obtain the battery of the embodiment.

### Comparative example 1

Meso carbon micro bead (d002 = 3.55 Å) applied to heat treatment at 1200°C is used as an anode. The other conditions of a battery in the comparative example 1 are the same as in the battery in the embodiment.

### Comparative example 2

Needle cokes (d002 = 3.37 Å) applied to heat treatment at 2800°C is used as an anode. The other conditions of a battery in the comparative example 2 are the same as in the battery in the embodiment.

### Comparative example 3

Natural crystalline graphite (d002 = 3.36 Å) is used as an anode. The other conditions of a battery in the comparative example 3 are the same as in the battery in the embodiment.

Experiment of charge and discharge at a certain current of the batteries in the example and comparative examples is carried out under the conditions of 100 mA of charge and discharge, 4.1 V of the last charge and 3.0 V of the last discharge. Fig.2 comparatively shows the charge-discharge curve in the tenth cycle. Fig.3 comparatively shows the cycle properties. Though the charge and discharge have been carried out before sealing the battery in the comparative example 3, upon charging, the safety valve was functioned as the internal pressure increased and finally the electrolyte leaked. Accordingly the battery could no longer be used and the experiment was discontinued.

As seen clearly from Fig.2, the batteries of the embodiment and the comparative example 2, in which the highly graphitized cathodic materials are used, have the capacity of 450 - 500 mAh and the average voltage upon discharging is as high as 3.7 V. On the contrary, the battery of the comparative example 1, in which the non-graphitized anode material is used, has only 350 mAh. The inclination of the charging and discharging curve is steep and the average discharging voltage is as low as 3.5 V. As seen clearly from Fig.3, the cycle flatness of the battery in the example is fair and charging and discharging of more than 500 cycles is possible. On the contrary, the battery of the comparative example 2, in which needle cokes is used, significantly deteriorates according to the cycles and in the 50 cycles, the capacity of the battery has reduce to half or less than the initial capacity. The battery was disassembled after the 100 cycles to observe the cathodic plate. As a result, the swelling and peeling off of the mixture coating were remarkable. On the other hand, the battery of the example, in which meso carbon micro bead is used, was disassembled after the 500 cycles, but no noticeable changes in the anode plate were found out. Fig.4 shows scanning electron microscope photographs of meso carbon micro bead used in the example. Gilsonite cokes and fluid cokes comprise spherical particles similar to these particles.

In the present embodiment, meso carbon micro bead is used as the cathodic material, but gilsonite cokes, fluid cokes and further a mixture thereof give the same effect.

As is clear from the above explanation, the secondary battery with non-aqueous electrolyte according to the present invention, in which the graphite materials comprising spherical particles of graphitizing carbon, employed as the anode is used in combination with the cathode comprising composite oxide containing lithium, has high voltage and high capacity and the excellent cycle property.

### EXAMPLE 2

The cathode is formed as follows.

100 weight parts of LiCoO₂ powder synthesized by sintering at 900°C for ten hours after mixing Li₂Co₃ and CoCO₃, 3 wt. parts of acetylene black, 4 wt. parts of graphite and 7 wt. parts of fluorocarbon resin binder are mixed and then suspended in a carboxymethyl cellulose aqueous solution to form a paste. The paste is applied to both sides of aluminum foil of 0.03 mm in thickness, dried and rolled to form an electrode plate of 0.18 mm in thickness, 40 mm in width and 280 mm in length.

The anode is formed as follows.

Meso carbon micro bead (d002 = 3.37 Å) heat-treated at 2800°C (hereinafter referred to as MCMB) and vapor growth carbon fiber (d002 = 3.42 Å) (hereinafter referred to as VGCF) or pitch carbon fiber (d002 = 3.45 Å) are mixed in a mixture ratio shown in Table 1 to prepare a composite carbon material. To 100 weight parts of the composite carbon material, 10 weight parts of fluorocarbon resin is mixed and then suspended in a carboxymethyl cellulose aqueous solution to form a paste. The paste is applied to both of copper foil of 0.02 mm thickness, dried and rolled to form an electrode plate of 0.19 mm in thickness, 40 mm in width, 280 mm in length.

The leads are attached to the cathode and anode plates respectively, and the plates are spirally wound through a separator of 0.025 mm in thickness, 46 mm in width, 700 mm in length, made of polypropylene to be stored in the battery case of 13.5 mm in diameter and 50 mm in height. Equivalent volume mixed solvent of propylene carbonate ethylene carbonate, dissolving lithium perchlorate therein in the ratio of 1 mol/ℓ, is used as the electrolyte.

Before sealing the battery, charge and discharge are carried out. After the gas generated is fully deaerated under vacuum, the sealing is carried out to obtain the battery of the embodiment.

Experiment of charge and discharge at a certain current of the batteries is carried out under the conditions of 100 mA of charge and discharge, 4.1 V of the last charge and 3.0 V of the last discharge in the tenth cycle. Fig. 5 comparatively shows the cycle properties.

**Table 1**

| battery No. | carbon fiber mixture ratio (%) (on the basis of MCMB weight) | carbon fiber |
|---|---|---|
| 1 | 0 | - |
| 2 | 5 | VGCF |
| 3 | 5 | pitch carbon fiber |
| 4 | 15 | VGCF |
| 5 | 25 | VGCF |

As seen clearly from Fig.5, in the case of the battery 1 including no carbon fiber, a primary capacity is as large as 500 mAh or more while a capacity detorioration becomes remarkable accompanied with charge-discharge cycles. On the other hand, in the case of the batteries 2 - 4 containing 5 to 15 wt. % of VGCF or pitch carbon fiber, it is found that a capacity deterioration is quite small while a high capacity is kept. In the case of the battery 5 containing 25 wt. % of VGCF, a capacity is quite small although the cycle property is relatively good. This reason is in that VGCF dominates the carbon material and thus the depolarizing mix amount ratio therein decreases. In any cases, average discharge voltages were about 3.7 V.

Further, after 10th cycle of discharge in the batteries constructed under same condition as above, the tests were stopped and the battery were decomposed to take out the anode plate thereof and observe the surface properties. As a result, in the case of the battery 1, swelling and deforming of the depolarizing mix is remarkable and the original shape can not be maintained.

On the other hand, in the case of the battery 2 to 5 including composite material mixed with carbon fibers, there is observed no noticeable charge such as swelling and deforming of the depolarizing mix and found the fact that the depolarizing mix can stand against the expansion and construction of the graphite component accompanied with the electric charge and discharge. Fig.4 shows scanning electron microscope photographs of meso carbon micro bead used in the example. It is confirmed that Gilsonite cokes and fluid cokes comprise spherical particles similar to these particles.

In the present embodiment, meso carbon micro bead is used as the anodic material, but gilsonite cokes, fluid cokes and further a mixture thereof give the same effect.

### Comparative example 4

Composite carbon material comprising natural crystalline graphite (d002 = 3.36 Å) in place of MCMB, with 5 wt. % of VGCF is used as an anode. The other conditions of a battery in the comparative example 1 are the same as in the battery in the above example 2.

### Comparative example 5

Composite carbon material comprising needle cokes (d002 = 3.37 Å) applied to heat treatment at 2800°C in place of MCMB, with 5 wt. % of VGCF is used as an anode. The other conditions of a battery in the comparative example 5 are the same as in the battery in the above example 4.

The batteries according to comparative examples 4 and 5, were tested for charge-discharge examination in a same condition as the above example. In the case of the battery according to comparative example 4, gases are largely produced on the electrolyte decomposition at the primary charge and little intercalation reaction of lithium proceeds, by which only 50 mAh or less in capacity is obtained. On observing the cathode plate after the battery is charged, there is found a remarkable swelling and deforming of the depolarizing mix.

In the case of the battery according to comparative example 5, a capacity deterioration becomes remarkable accompanied with charge-discharge cycle while about 300 mAh of a primary capacity is obtained. That is to say, no effect of the composite structure with carbon fibers was found. On observing the cathode plate, there is of course found swelling and deforming of the depolarizing mix.

As is clear from the above explanation, the secondary battery with non-aqueous electrolyte according to the present invention, in which the composite carbon material comprising carbon fibers and graphite materials comprising spherical particles, employed as the anode, has a satisfactory high voltage and capacity and the excellent cycle property.

## Claims

1. A secondary battery or cell with a non-aqueous electrolyte comprising
a cathode (4) comprising composite oxides containing lithium;
a non-aqueous electrolyte; and
an anode (4) capable of being recharged repeatedly, said anode comprising spherical graphite material containing graphitized spherical panicles,
**characterized in that**
said spherical graphite material is mesocarbon microbead made of mesophase spheres produced by carbonization of pitch as a raw material, wherein said sperical graphite material has a lattice spacing (d002) of 3.42 Å or less, as measured by wide angle X ray diffraction.

2. A secondary battery or cell with a non-aqueous electrolyte comprising a cathode (4) comprising composite oxides containing lithium;
a non-aqueous electrolyte; and
an anode (4) capable of being recharged repeatedly, said anode comprising spherical graphite material containing graphitized spherical particles,
**characterized in that** said sperical graphite material is a composite carbon material containing 5 to 20% carbon fibers and a graphite material comprising spherical particles, wherein said sperical graphite material has a lattic spacing (d002) of 3.42 Å or less, as measured by wide angle X ray diffraction.

3. The battery or cell of claim 2,
**characterized in that** said spherical graphite material is at least one material selected from meso carbon micro bead made of mesophase sphere produced by carbonization of pitch as a raw material, and of spherical fluid cokes or gilsonite cokes, both materials having been subjected to heat treatment for graphitization.

4. The battery or cell of anyone of the preceding claims,
**characterized in that** said lattice spacing is 3.36 Å to 3.42 Å.

5. The secondary battery or cell of anyone of the preceding claims,
**characterized in that** said cathode (4) comprises at least one material selected from LiCoO₂, LiMn₂O₄ or any other composite oxides thereof in which a part of Co or Mn is displaced by other elements.

## Patentansprüche

1. Sekundärbatterie oder -zelle mit einem nichtwässrigen Elektrolyten, aufweisend
eine Kathode (4) enthaltend zusammengesetzte Oxide, die Lithium enthalten,
einen nichtwässrigen Elektrolyten; und
eine wiederholt aufladbare Anode (4), wobei die Anode sphärisches Graphitmaterial aufweist, welches graphitierte sphärische Teilchen enthält,
**dadurch gekennzeichnet, dass**
das sphärische Graphitmaterial Mikrokügelchen aus Mesokohlenstoff sind, die aus Mesophasenkugeln hergestellt sind, welche durch Karbonisierung von Pech als Ausgangsmaterial hergestellt wurden, wobei das sphärische Graphitmaterial, gemessen mit der Weitwinkel-Röntgenbeugung, einen Gitterabstand (d002) von 3,42 Å oder weniger hat.

2. Sekundärbatterie oder -zelle mit einem nichtwässrigen Elektrolyten, aufweisend
eine Kathode (4) enthaltend zusammengesetzte Oxide, die Lithium enthalten,
einen nichtwässrigen Elektrolyten; und
eine wiederholt aufladbare Anode (4), wobei die Anode sphärisches Graphitmaterial aufweist, welches graphitierte sphärische Teilchen enthält,
**dadurch gekennzeichnet, dass**
das sphärische Graphitmaterial ein zusammengesetztes Kohlenstoffmaterial ist, welches 5 bis 20 % Kohlefasern und ein Graphitmaterial enthält, welches sphärische Teilchen umfasst, wobei das sphärische Graphitmaterial einen Gitterabstand (d002) von 3,42 Å oder weniger hat, der mit der Weitwinkel-Röntgenbeugung gemessen wurde.

3. Batterie oder Zelle nach Anspruch 2, **dadurch gekennzeichnet, dass** das sphärische Graphitmaterial mindestens ein Material ist, ausgewählt aus Mikrokügelchen aus Mesokohlenstoff, die aus Mesophasenkugeln hergestellt sind, welche durch Karbonisierung von Pech als Ausgangsmaterial hergestellt wurden, aus sphärischem Fließkoks oder Gilsonit-Koks, wobei beide Materialien einer Wärmebehandlung zur Graphitisierung unterworfen wurden.

4. Batterie oder Zelle nach einem der vorhergehenden Ansprüche, **dadurch gekennzeichnet, dass** der Gitterabstand 3,36 bis 3,42 Å beträgt.

5. Sekundärbatterie oder -zelle nach einem der vorhergehenden Ansprüche, **dadurch gekennzeichnet, dass** die Anode (4) mindestens ein Material enthält, ausgewählt aus LiCoO₂, LiMn₂O₄ oder anderen zusammengesetzten Oxiden daraus, bei denen ein Teil des Co oder Mn durch andere Elemente ersetzt wurde.

## Revendications

1. Batterie ou cellule secondaire à électrolyte non-aqueux, comprenant :
une cathode (4) contenant des oxydes composites contenant du lithium ;
un électrolyte non-aqueux ; et
une anode (4) qui peut être rechargée de manière répétée, dans laquelle la dite anode (4) comprend un matériau à base de carbone,
**caractérisé en ce que**
le dit matériau à base de graphite spherique est une micro goutte de méso carbone à base de sphères mésophases produites par carbonisation de poix en tant que matériau brut, dans lequel le dit matériau à base de graphite sphérique possède un écarteur de réseau (d002) de 3,42 Å où moins, mesuré par diffraction de rayon X à angle large.

2. Batterie ou cellule secondaire avec un électrolyte non aqueux comprenant une cathode (4) composée d'oxydes composites contenant du lithium ;
un électrolyte non-aqueux ; et
une anode (4) capable d'être rechargée de manière répétée, la dite anode comprenant un matériau à base de graphite sphérique contenant des particules sphériques graphitées,
**caractérisé en ce que** le dit matériau à base de graphite sphèrique est un matériau composite de carbone contenant de 5 à 20 % de fibres de carbone et un matériau à base de graphite comprenant des particules sphériques, dans lequel le dit matériau à base de graphite sphérique possède un écartement de réseau (d002) de 3,42 Å mesuré par diffraction de rayon X à angle large.

3. Batterie ou cellule selon la revendication 2,
dans laquelle le dit matériau à base de graphite sphérique est au moins un matériau sélectionné parmi la micro goutte de méso carbone à base de sphère mésophase produite par carbonisation de poix en tant que matériau brut et les cokes fluides sphériques ou bien les cokes gilsonites, ces deux matériaux ayant été soumis à un traitement thermique destiné à la graphitisation.

4. Cellule ou batterie selon l'une quelconque des revendications précédentes,
**caractérisée en ce que** le dit espacement de réseau va de 3, 36 Å à 3,42 Å.

5. Batterie ou cellule secondaire selon l'une quelconque des revendications précédentes,
**caractérisée en ce que** la dite cathode(4) comprend au moins un matériau sélectionné parmi le LiCoO₂, le LiMn₂O₄ ou n'importe quel autre oxyde composite de ceux-ci dans lequel une partie de Co ou de Mn est déplacée par d'autres éléments.
